# EUROPEAN PATENT APPLICATION

(11) **EP 0 551 060 A1**
(43) Date of publication of application: **14.07.1993**
(21) Application number: 92830667.9
(22) Date of filing: 10.12.1992
(51) Int. Cl.: F16H 57/00, H01H 3/40, H01H 19/18, F16H 57/02, G05G 21/00

(54) **Worm gear limit switch device on which a component of a variety of types can be mounted**

(30) Priority: 12.12.1991 IT MI911091 U
(71) Applicant: TECNO ELETTRICA RAVASI S.r.l., I-22056 Olgiate Molgora (Co) (IT)
(72) Inventor: Blasi, Osvaldo, Olgiate Molgora (Co) (IT)
(74) Representative: Klausner, Erich

(57) **Abstract**

The worm gear limit switch device has very small overall dimensions due to a close-packed arrangement of a set (45) of step-down gears, assembled on two pins (26, 30) ; by means of which is possible to obtain very high final step-down ratios. Inside the casing made up of a base (10) and of a cover (80), there is an intermediate plate (50) with a flat surface (52), on which there is a bush (38) for the movement intake of a variety of components that can be quickly mounted in by using previously prepared seats. The toothed wheels of said set (45) of gears can be assembled by means of hubs with polygonal shape (23, 29, 37) which make the assembling easier.

## Description

This invention refers to a worm gear limit switch device which offers the advantage of a quick and easy assembling both of its mechanical elements and of the electromechanical operating components connected with it, and which offers a variety of possibilities of obtaining a wide and subdivided range of revolution reducing ratios.

At present devices of the above-mentioned kind are known which, besides having quite limited reduction ranges, for example from 1:50 to 1:400, have the disadvantage that their mechanical structure is formed by a quantity of single gears to be separately assembled on one or more pins, which sometimes are very elaborate and therefore expensive; moreover these gears are arranged in such a way as to need a lot of space, so that the overall dimensions of the devices are bigger, which is often incompatible with the space available for their housing.

The complex and fragmentary assembling of the various parts requires labour time and does not allow to supply the customers quickly. Furthermore, there is no flat assembling surface, with at least one outlet, on which electromechanical and electronic operating elements in different combinations can be easily and alternatively assembled.

The purpose of this invention is to create a worm gear limit switch device, which is as closepacked and precise as possible, which avoid said disadvantages, which can be quickly and easily assembled and can have a wide subdivided range of step-down ratios, and in which it is as quick as easy to assemble the operating components.

According to the invention, the worm gear limit switch device includes a semi-casing as its base, in which the inlet worm screw shaft is arranged in longitudinal direction and meshes with a respective helicoidal wheel which turns on a first pin; this helicoidal wheel is connected, by means of a polygonal hub integral with it, with a pinion gear which moves transmission gears that are coupled each other and turn on a second lateral pin, parallel to the first one.

One of the above-mentioned transmission gears in turn transmits the movement to a final toothed wheel, which is clearly pivoted on the first pin and can be connected by means of a polygonal coupling with an outlet bush in order to transmit the movement with reduced spin velocity to electric and/or electronic operating components, which, in their turn, act as servo-control on machine or equipment members. These components are advantageously assembled on an intermediate plate that divides the space inside the device, in between the casing base and the closing cover, in two parts; in the lower part there is the set of reducing gears, while in the upper part there are the operating components. The latter are fastened to the upper surface of the above-mentioned intermediate plate, on whose side at least one hole is provided facing the coupling of the final toothed wheel of the set of step-down gears; there is also a quantity of seats, or grooves to make it easier to assemble different types of operating components which can be freely chosen according to one's needs.

The first and the second pins of the toothed wheels of the step-down set consist of simple pins sheared from a metal rod, and therefore very cheap. Thanks to the arrangement of the step-down gear set, it is possible to obtain a wide range of ratios, between the maximum and the minimum ones, reducing the spin velocity from the inlet shaft and the final toothed wheel axis. In fact, even keeping fixed the worm screw shaft and the relevant helicoidal toothed wheel, it is possible to obtain various mates of the pinion gear and the transmission toothed wheels, maintaining the center distance of the pins, in order to have a good enough sequence of reduction ratios.

In order to make the assembling easier, the helicoidal toothed wheel connected with the worm screw shaft can be preassembled with the pinion gear by means of a drilled polygonal hub, which is moulded integral with the toothed wheel; it is also possible to join two transmission toothed wheels and to couple the final toothed wheel with the relevant outlet final coupling.

Furthermore, the arrangement of the set of the step-down gears with the slower final toothed wheel which is coaxial with the first pin, placed in a corner of the casing base opportunely positions the movement intake of the operating component in a corner of the intermediate plate, thus exploiting, in the best possible way, the space available on the plate itself, which, on the other hand, is quite limited, as are also the dimensions of the device.

The details of the invention will now be described on the basis of an exemplifying assembled device with reference to the enclosed drawings, in which:
Fig. 1 shows, in a perspective exploded view, an assembling example of the structure of the worm gear limit switch device, according to the invention;
Fig. 2 shows a partial longitudinal cross section of the arrangement of the toothed wheels which form the step-down set of the devide;

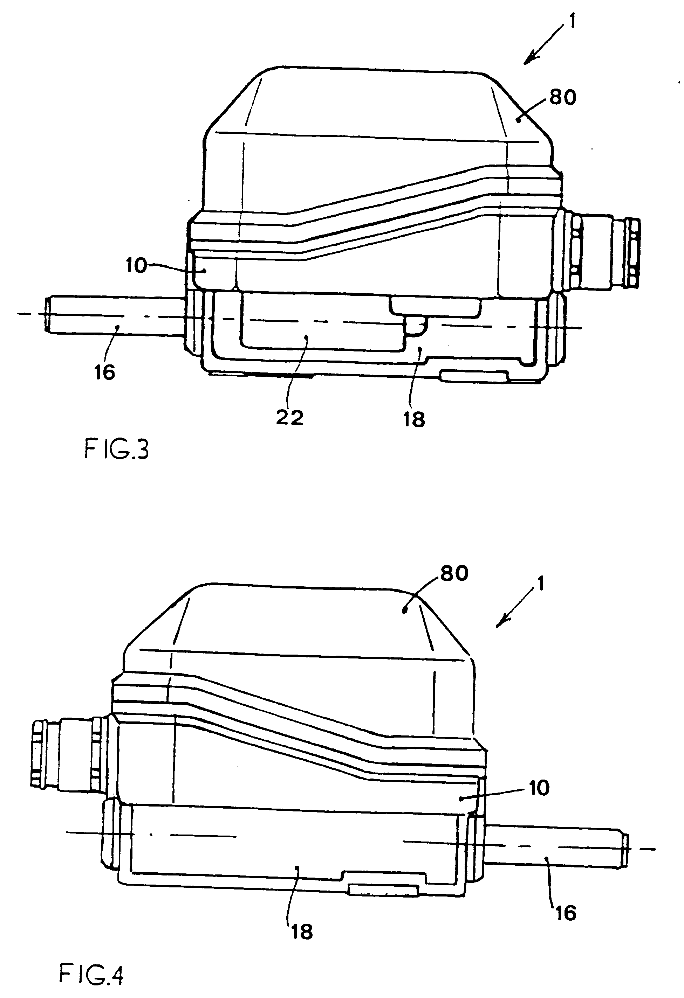

Fig. 3 shows a lateral view of the external shape of the device shown in Fig. 1, seen from one of its sides;
Fig. 4 shows a lateral view of the same device of figure 1, seen from the opposite side of Fig. 3; and
Fig. 5 shows a plan view of the device of Fig. 1, from the bottom.

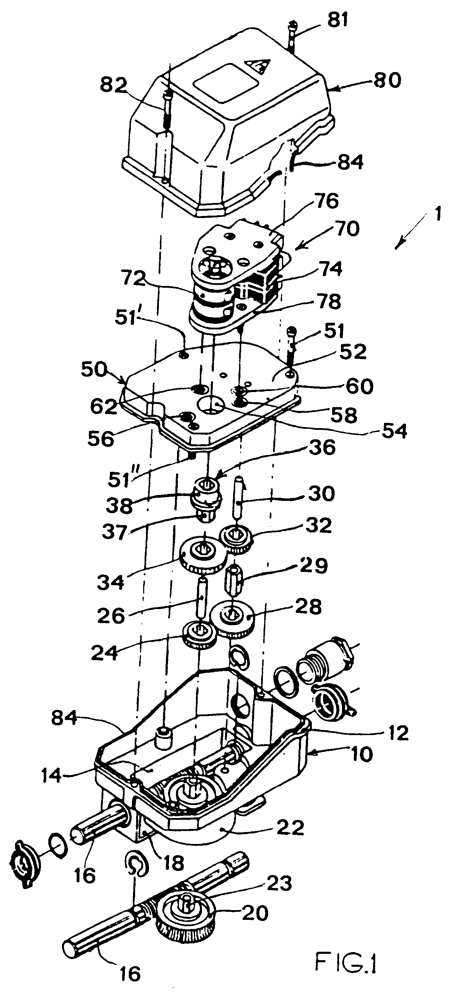

In fig. 1 the device according to the invention, generally marked by reference 1, includes a body formed by a lower shaped casing, or base 10, on top of which it is possible to place a cover 80 which can be fastened, by means of screws 81 and 82, to the edge 12 of the base, a gasket 84 makes the casing tight.

Inside base 10 it is possible to fasten, by means of screws 51, 51', 51'', an intermediate plate 50 which divides the inside of the device body, in two parts; the lower part 14 forming, practically the casing of the set of step-down gears, while in the upper part can be mounted an operating component of whatsoever type such as, for example, a set of cams and their respective microswitches, marked with 70, and/or potentiometers.

On top of the intermediate plate 50 there is a flat surface 52 provided with a hole 54 for guiding a coupling bush constituting the movement intake for a component like the above-mentioned one 70, and provided also with other holes, or blind seats 56, 60, 58, 62... to easy assemble various components contemplated by the manufacturer, as for example said component 70, comprising a group of cams 72 and microswitches 74, already preassembled between two small plates 76 and 78, and which can be assembled on the intermediate plate 50 by means of screws inserted in the seats 58, 62. Seats 56 and 60 are used to assemble, for example, a potentiometer instead of the microswitch 70.

The practicalness of the inner arrangement of the device according to the invention, must be underlined since it makes possible both to assemble quickly the set of step-down gears in the manufacturing plant, and to replace easily any operating component, such as the component 70, which may be damaged by use or may need to be adjusted in a different way, by taking away only the cover 80 in order to reach the upper inner part, while the lower part containing the reduction gears is left isolated and protected from the entry of foreign matters.

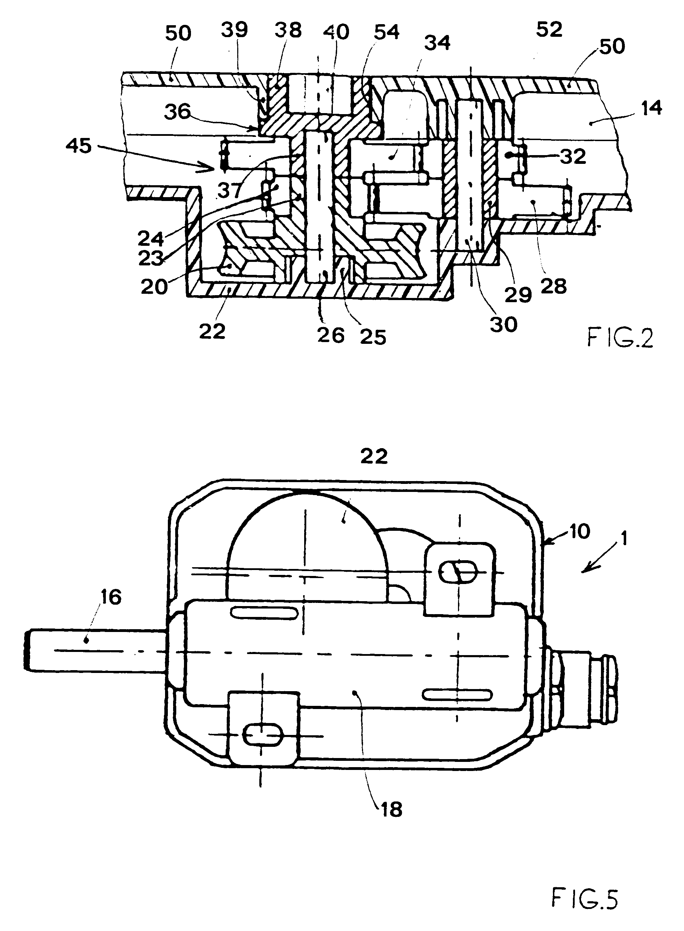

Fig. 1, together with fig. 2, show the arrangement of the toothed wheels which constitute the step-down set of the device, as a whole marked with 45 in figure 2.

The inlet worm screw shaft 16, which can be connected with a corresponding shaft of a machine or equipment (not shown) that has to be set by the device, is placed in a longitudinal sump 18 on the bottom of the base 10 and is connected with a helicoidal wheel 20, thus creating a first pre-arranged reducing ratio range. The helicoidal wheel 20 is arranged in a recess 22 and its central part is integral with a drilled polygonal hub 23, on which a pinion gear 24 is assembled; the latter is coaxial with the first pin 26 of the wheel 20, which is perpendicular to the axis of the shaft 16. The pinion gear 24 meshes with a first transmission toothed wheel 28 which turns freely on a second pin 30, parallel to the pin 26; this toothed wheel 28 is coaxially connected, by means of a polygonal hub 29, with a second transmission wheel 32, which, in turn, meshes with a toothed wheel 34, which turns freely on the first pin 26, mutual for wheel 20 and 24. The latter toothed wheel 34 is provided with a coupler 36 which, towards its lower end, has a polygonal hub 37 so that it can be connected, in its lower part, with said wheel 34, while towards its upper end, is provided with an end bush 38 having an outer cilindric shape to be guided in a hole 54 of the intermediate plate 50 and, inside, a polygonal seat 40 in which it is possible to insert the corresponding tang of an operating component, such as for example said component 70 with cams and microswitches or a potentiometer.

Thanks to the step-down gear set 45, whose pinion gear 24 and first transmission wheel 28, as well as the wheels 32 and 34, can be mutually sized, it is possible to obtain, in between a minimum and a maximum reduction ratio value, a wide range of intermediate ratios. For the sake of brevity, we call d24, d28, d32 and d34 the number of teeth of the corresponding gears, and RB the basic reduction ratio between the worm screw and the helicoidal wheel 20; the total reduction ratio ρ is:
ρ = d34 : d32 x d28 : d24 x RB
For example having:
d34 = 36 d28 = 40
d32 = 74 d24 = 70
we will have, with basic reduction ratio RB = 70, a minimum ratio ρ = 19,4, while, by using other toothed wheels with a number of teeth and therefore pitch diameters consistent with the center distance between the first pin 26 and the second pin 30, as for example:
d34 = 72 d28 = 72
d32 = 38 d24 = 38
and being RB always equal to 70, it is possible to have a maximum total ratio ρ = 251,3. Different matings of toothed wheels can be used to obtain intermediate ratios, whose values are, for example, about 25, 50, 75, 100, 150, 200.

The diameter, or the overall dimension of the helicoidal wheel 20 which gives the inlet basic reduction ratio, affects the overall dimensions of a certain type of limit switch. For example, fixing a value of RB = 100 and therefore having bigger dimensions of the helicoidal wheel 20 and its recess 22 and consequently using a different range of the toothed wheels 24, 28, 32, 34, it is possible to obtain reduction ratios ρ in between a minimum of about 10 and a maximum of 900, keeping the structure of the device similar to the one described and illustrated. Of course, when the dimensions of the limit switch are bigger it is possible to assemble more complex and different operating components on the plate 50.

The described structure presents many advantages. First of all, from the point of view of the assembling, it is possible to preassemble sets of wheels 20, 24; 28, 32; 34 with the respective coupler 36, and so on, so that the final assembling becomes easier. Thanks to a first slack centering 25, it is easier to insert the helicoidal wheel 20 on the bottom of the recess 22, while the final exact centering is obtained after inserting the pin 26.

Pins 26 and 30 are very simple and are very cheap because they are simple pins sheared from a metal rod. Finally, it must be pointed out once again how quick it is to assemble the operating components on the flat surface 52 of the intermediate plate 50, and how easy it is to replace them, if a change or resetting of the electrical component is needed, taking away only the cover 80, which has unlosable screws 81, 82 that are very useful when such a maintenance have to be achieved in an often very uncomfortable position.

When one needs a lower step-down ratio, it is possible to replace the transmission - group worm screw - helicoidal wheel with two bevel gears.

## Claims

1. A worm gear limit switch device, characterized by a casing base (10) and a cover (80) which can be fastened by means of screws (81, 82) to said base, within the perimeter of the latter; being provided an intermediate plate (50) which divides the space inside the device in a lower part (14) in which there is the set (45) of the step-down gears, and in a upper part comprised between the upper surface (52) of said plate (50) and the cover (80) which is used for assembling different types of operating components such as microswitches and/or potentiometers whose rotation axis is coupled with a bush (38), whose inner seat (40) has a polygonal shape, said bush being connected with the final outlet toothed wheel (34) of the above-mentioned set of transmission and step-down gears assembled on two parallel pins; the rotation movement of the first gear (20) of said set of gears being derived from a driving, or inlet shaft (16) which is at a right angle with respect to the two parallel pins; said end bush (38) being guided in a relevant hole (54) of the intermediate plate (50), on the surface (52) of which is contemplated a plurality of threaded holes or blind seats (56, 60, 58, 62...) whose positions are consistent with the standard connections of said operating components.

2. A worm gear limit switch device according to claim 1, characterized in that the set (45) of step-down gears includes a worm screw which is integral with the inlet shaft (16) engaging an helicoidal wheel (20) which turns on a first pin (26) perpendicular to the said shaft (16), and includes also a set of four transmission toothed wheels (24, 28, 32, 34), two of which (24, 34) are coaxial with said first pin (26) of the helicoidal wheel (20), while the other ones (28, 32) turn on a second pin (30), which is placed next to, and parallel to said first pin; by means of the said four toothed wheels being possible to constitute various matings in order to obtain, on the final wheel (34), step-down ratios, which may vary in between a minimum and a maximum value, the final wheel (34) transmitting the rotation to said bush (38) provided with an hexagonal seat (40).

3. A worm gear limit switch device according to claims 1 and 2, characterized in that the helicoidal wheel (20) is connected, by means of a polygonal hub (23), integral with it, with the first wheel (24) of the set of gears that meshes with a second toothed wheel (28), which turns freely on the second pin (30) and which, by means of a polygonal hub (29), rotates the third toothed wheel (32) while; the latter mates in turn with the final toothed wheel (34) that turns freely on the first pin (26), above the first toothed wheel (24).

4. A worm gear limit switch device according to claim 3, characterized by that the bush (38), which acts as movement intake of the operating set (70), constitutes the upper part of a coupler (36), whose lower part is integral with a polygonal hub (37) which is torsionally connected with the final wheel (34) of the set (45) of step-down gears of the limit switch, the center of said hub being provided with a blind hole for the centering on the first pin (26).

5. A worm gear limit switch device according to claims 1 to 4, characterized in that the bottom of the casing base (10) is provided with a roughly parallelepipedal longitudinal sump (18) in which is housed the inlet shaft (16) of the device, which can be connected with the rotating member of a machine or equipment, the revolutions of which have to be controlled by the contemplated operating component, while the helicoidal wheel (20), connected with the said inlet shaft, is housed in a recess (22) next to the longitudinal sump (18), so that the pin (26) of said wheel (20) and the bush (38) of the coupler (36) coaxial with said pin, are next to the corner of the plate (50) in order to facilitate the assembling of the contemplated component.

6. A worm gear limit switch device according to claims 1 to 5, characterized in that the first and the second pin, respectively (26) and (30), are made up of simple pins sheared from a metal rod.

7. A worm gear limit switch device according to claims 1 to 6, characterized in that the upper surface (52) of the intermediate plate (50) is flat.

8. A worm gear limit switch device according to one or more of the claims 1 to 7, characterized in that the set (45) for transmission and step-down gears is constituted by gears that can mate each other by means of prismatic elements with polygonal base provided with a central round hole, which are discrete and/or integral with other elements such as said coupler (36) or one or more of the gears.

9. A worm gear limit switch device according to claim 1, characterized in that the first gear for the transmission of the rotating movement of the driving shaft is a toothed bevel gear which meshes with a respective bevel gear assembled on the said first pin (26) to replace the worm screw helicoidal wheel reducing set.
Milan,
